# EUROPEAN PATENT SPECIFICATION

(11) **EP 4 106 184 B1**
(45) Date of publication and mention of the grant of the patent: **04.11.2026**
(21) Application number: 21179397.1
(22) Date of filing: 15.06.2021
(51) Int. Cl.: H02P 27/02

(54) **KITCHEN APPLIANCE COMPRISING AN EXHAUST DEVICE**
KÜCHENGERÄT MIT EINER ABSAUGVORRICHTUNG
APPAREIL DE CUISINE COMPRENANT UN DISPOSITIF D'ÉCHAPPEMENT

(43) Date of publication of application: 21.12.2022
(73) Proprietor: Electrolux Appliances Aktiebolag, 105 45 Stockholm (SE)
(72) Inventor: TARTUFERI, Mariano, 33080 Porcia (IT); CARTECHINI, Roberto, 33080 Porcia (IT); MANCINELLI, Ivan, 33080 Porcia (IT)
(74) Representative: Electrolux Group Patents

(56) References cited:
- CN-U- 203 744 333
- CN-U- 206 060 490
- US-B1- 6 208 113

## Description

The present invention relates to a kitchen appliance comprising an exhaust device for exhausting vapour or fumes generated in a cooking process.

DE 31 04 658 A1 discloses circuit arrangement for controlling the rotational speed of electric motors, in particular fan motors in kitchen hoods, by cutting the phase of the electric alternating current supplied to the motor. Those electric motors shall have a very low operating noise. However, it is known that electric motors operated by phase cutting control may emit a disturbing humming sound. In order to reduce such a humming sound in the aforementioned electric motors, a circuit arrangement having a triac-controlled phase cutting control is suggested, wherein an ohmic power resistor and a capacitor are arranged in series with the motor windings and parallel to the triac control arrangement and to an inductive element arranged in series to the triac control arrangement. Further, generation of a disturbing humming sound can be reduced.

DE 32 07 262 A1 discloses a control for a rotational speed of a fan motor for a kitchen hood which shall result in the reduction of motor noise. The proposed control includes providing a sinus wave form for controlling the motor.

CN 203 744 333 U discloses a motor speed adjusting device for air capacity control of an extractor hood. The motor speed adjusting device comprises a monophase asynchronous motor, wherein a connection point of a main coil and an auxiliary coil of the monophase asynchronous motor is connected with a zero wire, a connection point of the main coil and an operating capacitor is connected with a live wire, and a first switch is arranged on the live wire. The motor speed adjusting device further comprises a speed adjusting capacitor which is connected in parallel with the first switch. According to the structure, the operating capacitor is in charge of the starting of the motor, and the first switch realizes full-speed rotation of the motor; due to the arrangement of a speed adjusting control branch, the speed adjustment of the monophase asynchronous motor can be realized, and thus a high energy efficiency grade standard of extractor hoods in the national standard is achieved.

CN 206 060 490 U discloses a method and circuitry providing a fast motor of three speed adjusting, the single -phase asynchronous motor comprises a stator core, main coil winding L1, a secondary coil winding L2, the 2nd secondary coil winding L3 and running capacitor C1, still include speed governing electric capacity C2, main coil winding L1, it is parallelly connected with running capacitor C1 after a secondary coil winding L2 and the 2nd secondary coil winding L3 establish ties, draw forth the main tapping between main coil winding L1 and the running capacitor C1, it takes a percentage to draw the top gear between a main coil winding L1 and the secondary coil winding L2, the work of this kind of fast motor of three speed adjusting is when the low -speed shelves, if stifled the commentaries on classics is taken place, utilize speed governing electric capacity C2 to step down, effective control motor current density, work efficiency is high, and the temperature rise of motor is slower, is difficult for leading to motor burnout, has improved the security that the motor used, has also improved the life of motor, in addition, through reducing the number of slots on the stator core, can possess under the prerequisite of same sectional area at stator core, reduce the density of magnetic flux to reduce motor heating.

US 6 208 113 B1 discloses a system for controlling the rotation speed of single phase motors. In this case, a controllable electronic switching device is connected upstream of the motor and is actuated by a control unit such that a sinusoidal input AC voltage is used to produce a motor AC voltage which can be varied in order to change the rotation speed. The control unit is designed in such a manner that the fundamental frequency and/or the amplitude of the motor AC voltage can be varied by phase gating.

It is an object of the present invention as defined in claim 1 to provide an advantageous kitchen appliance comprising an exhaust device having low noise generation.

The object of the present invention is achieved by a kitchen appliance comprising an exhaust device for exhausting vapour or fumes generated in a cooking process, wherein the exhaust device comprises an electric motor and circuitry to control the rotational speed of the electric motor, wherein the electric motor comprises at least one first winding connectable or connected to a power source, wherein the first winding when being connected to the power source receives an alternating current provided by the power source and causes the electric motor to rotate at a predetermined rotational speed being dependent on the alternating current received by the first winding, wherein the circuitry comprises at least one first capacitor that is switchable or switched in series with the first winding and that causes the electric motor to rotate at a rotational speed lower than the predetermined rotational speed when being switched in series with the first winding.

Further, the kitchen appliance is configured to operate the exhaust device when a cooking process associated with the kitchen appliance is running and/or is stopped, wherein the first capacitor is automatically switched in series with the first winding upon or after stopping of the cooking process associated with the kitchen appliance.

The first capacitor has a capacitance in the range from 1µF to 11µF, and
the exhaust device generates an exhaust air flow volume equal or lower than 300m³ gas per hour.

In this way, the use of a phase cutting control, specifically of a triac-controlled phase cutting control can be avoided. Thus, the electric motor of the exhaust device is enabled to run at a very low rotational speed such that the noise emission can advantageously fall below a threshold for audibility by a human. This allows to continue operation of the exhaust device even after a cooking process in a very quiet environment without hearable disturbances. Thus, the kitchen appliance can be operated at a noise level hardly or not hearable to the user after the end of the cooking process for completely removing residues of vapour or fumes still present at the end of the cooking process. It shall be noted that the suggested circuitry does not allow to control the rotational speed of the electric motor at more than two distinct speeds.

If the kitchen appliance is a kitchen hood or an exhaust hood being arranged separately from the cooking appliance, e.g. the cooking hob, from which vapour or fumes are supposed to be exhausted, the kitchen hood or the exhaust hood may be configured to be in communication, e.g. in data communication, with the cooking appliance such that the kitchen hood or the exhaust hood may be operated, in particular automatically, when the cooking process runs on the cooking appliance. In this case, the cooking process is associated with the kitchen hood or the exhaust hood.

Accordingly, if the cooking process is terminated or is stopped, the first capacitor is automatically switched in series with the first winding upon or after termination or stopping of the cooking process associated with the kitchen hood or the exhaust hood. Thus, the kitchen hood or exhaust hood can continue its operation automatically at a noise level hardly or not hearable to the user after the cooking process for completely removing residues of vapour or fumes still present at the end of the cooking process. It is further possible to foresee automatic termination of the operation of the kitchen hood or the exhaust hood after a fixed or otherwise defined period.

Alternatively, if the exhaust device is integrated in a cooking appliance, it is possible that the exhaust device is controlled by or via the control means of the cooking appliance. In this case, the cooking process or processes running of the cooking appliance are associated with the cooking appliance, since these processes are subject to the cooking appliance control means.

The range for the first capacitor has been found to achieve sufficient voltage drop over the first winding of a conventional electric motor commonly used for an exhaust device.

The exhaust air flow volume has been found to generate air flow noise hardly or not hearable for the user, while the volume has been found to be sufficient for satisfactory cleaning of the ambient air in standard kitchens spaces.

Advantageously, the first capacitor switched in series with the first winding causes an increased voltage drop over the first winding compared to a voltage drop over the first winding with the first capacitor being not switched in series with the first winding.

The voltage drop over the first winding causes a reduction of the rotational speed of the electric motor without cutting away a part of the voltage wave form. This results in an improved energy efficiency in comparison to a phase cutting control.

Further advantageously, the electric motor includes at least two or three or four or more windings, wherein the electric motor is caused to rotate at its maximum rotational speed when the first winding, in particular is the only winding of the electric motor that, is connected to the power source.

Thus, the electric motor can be adapted to a specific application of an exhaust device.

According to a further advantageous embodiment, the electric motor is an asynchronous induction motor, in particular a single phase asynchronous induction motor, wherein the circuitry comprises at least one second capacitor that causes the electric motor to start rotation in response to connecting the electric motor with the power source, in particular that the at least one second capacitor causes a shift between a phase of a current in the first winding and a phase of a current in at least one second winding or in more than one further windings, such that the electric motor is caused to start rotation.

Thus, a simple and efficient way is provided to start the electric motor of the exhaust device. The capacitor allows to create a phase shift between the windings in order to generate a rotating magnetic field for triggering rotation of the motor from standstill.

In another advantageous embodiment of the invention, at least the second capacitor and the second winding and a third winding, in particular also a fourth winding, preferably also a fifth winding, are connectable or connected in series, wherein the serial connection of second capacitor, second and third winding, in particular also of fourth winding, preferably also of fifth winding, is connectable or connected in parallel with the first winding.

The phase shift can be created between the first winding and the serial connection of second to fifth winding which allows reliable triggering of the motor start.

In a further advantageous embodiment, the first capacitor has a capacitance in the range from 3µF to 9µF, preferably from 4µF to 8µF, more preferably 6µF, and/or
wherein the second capacitor has a capacitance in the range from 0,1µF to 10µF, in particular from 1µF to 6µF, preferably from 2µF to 4µF, more preferably 3,15µF.

Those ranges for the first capacitor have been found to achieve sufficient voltage drop over the first winding of a conventional electric motor commonly used for an exhaust device. The ranges for the second capacitor have been found to be appropriate for a suitable phase shift in the motor windings.

In an advantageous embodiment, the first capacitor and the second capacitor are arranged in one common capacitor component housing.

The use of such an integrated capacitor component simplifies the assembling process and increases robustness and safety of the circuitry used for the kitchen appliance.

According to a further advantageous embodiment, the exhaust device generates an exhaust air flow volume equal or lower than 250m³ gas per hour, preferably equal or lower than 200m³ gas per hour.

Those exhaust air flow volumes have been found to generate air flow noise hardly or not hearable for the user, while those volumes have been found to be sufficient for satisfactory cleaning of the ambient air in standard kitchens spaces.

Further advantageously, the kitchen appliance may be a kitchen hood or an exhaust hood or a cooking appliance, in particular a cooking hob or an oven.

Kitchen hoods or exhaust hoods are, in general, arranged above the cooking zones of cooking hobs in order to exhaust vapour or fumes by generated on that cooking zones.

Alternatively, it is possible, that the exhaust device is integrated in a cooking appliance, e.g. a cooking hob or an oven. If the exhaust device is integrated in a cooking hob, an inlet may be provided on the cooking hob, e.g. in a cooking hob plate for sucking in vapour or fumes from the cooking zones into the cooking hob. If the exhaust device is integrated in an oven, it is not used to clean the ambient air in the kitchen space, but to exhaust vapour or fumes from a cooking chamber to a filter and/or to the outside of the oven.

Novel and inventive features of the present invention are set forth in the appended claims.

The present invention will be described in further detail with reference to the drawings, in which
- Fig. 1: illustrates a schematic circuit diagram of a motor and motor control related components of an exemplary exhaust device;
- Fig. 2: illustrates a schematic circuit diagram of a motor and motor control related components of an exhaust device according to an embodiment of the invention;
- Fig. 3: illustrates another schematic circuit diagram a motor and motor control of an exhaust device according to an embodiment of the invention;
- Fig. 4: illustrates diagrams explaining the effect of a phase cutting control on an alternating electric current according to the prior art.

The following description is set out with respect to kitchen hoods or exhaust hoods being separate from a cooking appliance. Nevertheless, all features disclosed in the following description can also be applied in isolation or in arbitrary combination to an exhaust device being integrated into a cooking appliance such as a cooking hob or an oven, unless stated otherwise.

Kitchen hoods or exhaust hoods are, in general, equipped with a ventilation unit having a fan that allows the evacuation of vapours, fumes, odors and smells from the kitchen environment, thanks to the air flow elaborated by the fan itself. The fan us usually driven by an electric motor, wherein the rotational speed of the electric motor correlates to the magnitude of air flow or the air flow volume conveyed by the fan.

It is a common practice to keep ON the hood during the cooking process.

Additionally, it is possible to continue operation of the kitchen hood or the exhaust hood also after the termination of the cooking process in order to get a complete cleaning of the ambient air within the kitchen space. Cleaning the ambient air in the kitchen space after cooking process can be obtained with air flow rates lower than those used during the cooking process.

Lower air flow rates result in a lower noise emission of the kitchen hood or the exhaust hood. A low noise emission, preferably below the threshold for human audibility, is a required for a comfortable kitchen environment.

It is advantageous to provide a kitchen hood with an exhaust hood with a dedicated fan speed or a dedicated fan speed function to provide an air flow that is sufficient to remove residual vapour or fumes, odors or smells, while keeping low the noise level. Accordingly, a kitchen hood or exhaust hood is achieved with a specific operation mode in which the user does not or at least does hardly not percept the operation of the kitchen hood, thanks to low air flow rate.

The noise produced by the hood operating in such a specific operation mode does not derive from the air flow, because it is set at a value or order of magnitude that has been found to be sufficient to properly clean the ambient air in the kitchen space.

However, as a further source of noise, induction motors which are commonly used in kitchen hoods or exhaust hoods, typically generate a background "buzz" or "humming" motor sound. Such a motor sound is typical for this kind of motors, and it is masked, i.e. not hearable, only by the noise resulting from the air flow when the kitchen hood or exhaust hood is operated at mid / high air flow rates.

It is also known to use brushless DC electric motors or electronically commutated motors or synchronous DC motors for kitchen hoods or exhaust hoods. The motor sound of a brushless DC electric motor used in a kitchen hood or an exhaust hood is negligible and not hearable by a user. However brushless DC electric motors are expensive.

It is further known to use induction motors or asynchronous induction motors in kitchen hoods or exhaust hoods. It is known to use a dedicated triac acting on the asynchronous induction motors to realise control of the rotational speed of the motor. A triac is an electronic device able to implement a phase-cut of the waveform of the motor power supply, producing a lower rotational speed of the motor (lower air flow rate of the fan).

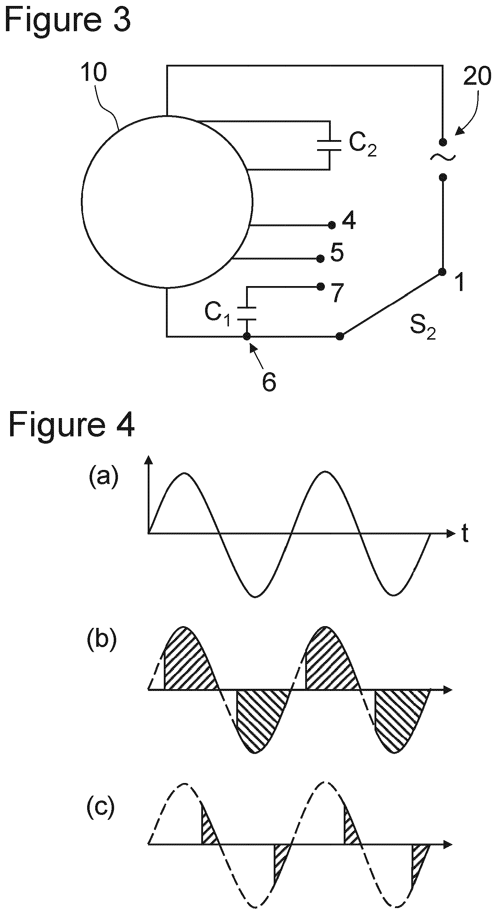

Fig. 4(a) shows a sinus wave of a power supply waveform, more specifically of a input voltage being equal to output voltage when the triac is disabled. The power supply waveform is "regular" or "uncut". If a motor is supplied with power having such a input voltage waveform, it spins at a speed corresponding to the winding design.

Fig. 4(b) and (c) show the output voltage when the triac is enabled, wherein the triac cuts the power supply waveform, thus limiting the rotational speed of the motor. The magnitude of the speed reduction is directly depending on the way the phase-cut is implemented.

The control of the rotational speed by phase cutting result in the typical background "buzz" or "humming" motor sound.

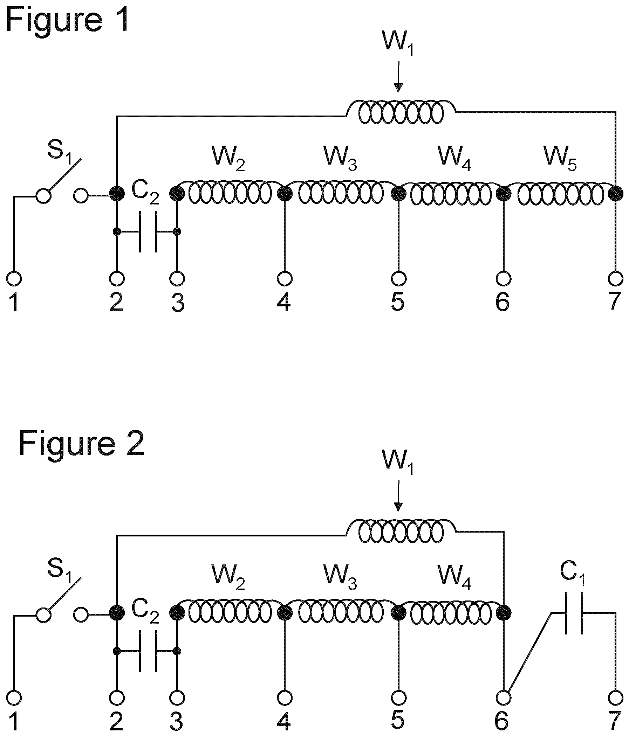

Fig. 1 illustrates a schematic circuit diagram of motor and motor control related components of an exemplary exhaust device. An electric motor 10 as shown in Fig. 3 comprises a first winding W₁, wherein the connection of the first winding W₁ with the power supply results in the maximum rotational speed of the electric motor 10. The first winding W₁ is connectable or connected in parallel with a plurality of windings W₂, W₃, W₄, W₅ and a capacitor C₂, also referred to as second capacitor C₂. A main switch S₁ may be open or close in order to connect or disconnect the windings W₁, W₂, W₃, W₄, W₅ with the power supply 20.

In order to provide circuit configuration for starting the motor 10 or for varying the rotational speed of the electric motor 10, there are switch taps 1, 2, 3, 4, 5, 6 and 7 which allow various connective configurations of the windings W₁, W₂, W₃, W₄, W₅ and the capacitor C₂.

The capacitor C₂ is used in a single phase motor to create a phase shift in the currents through the different motor windings in order to generate a rotating magnetic field that triggers the start of the rotation of the electric motor 10 from standstill. E.g. in order to provide a suitable circuit configuration for starting the motor from standstill, the first winding W₁ may be connected in parallel to a serial connection of the second winding W₂ and the capacitor C₂. Third to fifth winding W₃, W₄, W₅ may be made inactive by a short cut between switch taps 4, 5, 6 and 7.

In such a configuration, the main switch S₁ may be closed, supplying an electric current, that is divided according to the parallel circuit configuration such that respective parts of the electric current flow through the first and second winding W₁, W₂, wherein the capacitor C₂ delays the part of the current through the second winding W₂ relative to that part of the current through the first winding W₁ and thus causes first and second windings W₁, W₂ to induce a rotating magnetic field for starting the electric motor 10.

Fig. 2 illustrates a schematic circuit diagram of motor and motor control related components of an exhaust device being modified in comparison to the embodiment shown in Fig. 1, wherein the fifth winding W₅ has been removed, while an additional capacitor C₁, in the following referred to as first capacitor C₁, has been added.

The first capacitor C₁ may be connectable or connected in series to the first winding W₁, wherein the complete parallel branch comprising the second capacitor C₂, and windings W₂, W₃, W₄ may be short cut or to a parallel connection of the first winding W₁ with a serial connection of the second capacitor C₂ with second and/or third and/or fourth winding W₂, W₃, W₄. Or to a serial connection of the second and/or third and/or fourth winding W₂, W₃, W₄.

The first capacitor C₁ when switched in series with the first winding W₁ causes an increased voltage drop over the first winding W₁ compared to a voltage drop over the first winding W₁ with the first capacitor C₁ being not switched in series with the first winding W₁.

Thus, the rotational speed of the electric motor 10 is controlled at a very low magnitude such that the exhaust device can operated with a noise emission close at or below the threshold for audibility by a human.

Fig. 3 illustrates a circuit diagram corresponding to the circuit diagram of Fig. 2, illustrating switching possibilities provided by an additional second switch S₂. The second switch S₂ allows to selectively connect the switch tap 1 as shown Fig. 2 with the switch taps 4, 5, 6 or 7. In a position of second switch S₂ connecting switch taps 1 and 7, the first capacitor C₁ is connected in series with the first winding W₁, thus, running the electric motor 10 at a very low rotational speed with low noise emission.

If the second switch S₂ is in a position connecting switch taps 1 and 6, the first capacitor C₁ is inactive and the voltage drop over the first winding W₁ causes the electric motor 10 to rotate at maximum rotational speed.

If the second switch S₂ is in a position connecting switch taps 1 and 4 or 1 and 5, the first winding W₁ is connected in series with the third and/or fourth winding W₃, W₄, resulting in a reduced rotational speed of the electric motor 10 having a noise emission beyond the audible threshold.

### List of reference numerals

- 1 to 7: taps
- 10: electric motor
- 20: power supply
- S₁: Main switch
- W₁ to W₅: Windings
- C₁ to C₂: Capacitors

## Claims

1. Kitchen appliance comprising an exhaust device for exhausting vapour or fumes generated in a cooking process, wherein the exhaust device comprises an electric motor (10) and circuitry to control the rotational speed of the electric motor (10), wherein the electric motor (10) comprises at least one first winding (W₁) connectable or connected to a power source, wherein the first winding (W₁) when being connected to the power source (20) receives an alternating current provided by the power source (20) and causes the electric motor (10) to rotate at a predetermined rotational speed being dependent on the alternating current received by the first winding (W₁), wherein the circuitry comprises at least one first capacitor (C₁) that is switchable or switched in series with the first winding (W₁) and that causes the electric motor (10) to rotate at a rotational speed lower than the predetermined rotational speed when being switched in series with the first winding (W₁),
**characterized in that**,
the kitchen appliance is configured to operate the exhaust device when a cooking process associated with the kitchen appliance is running and/or is stopped, wherein the first capacitor (C₁) is automatically switched in series with the first winding (W₁) upon or after stopping of the cooking process associated with the kitchen appliance,
wherein the first capacitor (C₁) has a capacitance in the range from 1µF to 11µF, and
the exhaust device generates an exhaust air flow volume equal or lower than 300m³ gas per hour.

2. Kitchen appliance according to claim 1, **characterized in that** the first capacitor (C₁) switched in series with the first winding (W₁) causes an increased voltage drop over the first winding (W₁) compared to a voltage drop over the first winding (W₁) with the first capacitor (C₁) being not switched in series with the first winding (W₁).

3. Kitchen appliance according to any one of the preceding claims, **characterized in that** the electric motor (10) includes at least two or three or four or more windings (W₁, W₂, W₃, W₄, W₅), wherein the electric motor (10) is caused to rotate at its maximum rotational speed when the first winding (W₁), in particular is the only winding of the electric motor (10) that, is connected to the power source (20).

4. Kitchen appliance according to any of the preceding claims, **characterized in that** the electric motor (10) is an asynchronous induction motor, in particular a single phase asynchronous induction motor, wherein the circuitry comprises at least one second capacitor (C₂) that causes the electric motor (10) to start rotation in response to connecting the electric motor (10) with the power source (20), in particular that the at least one second capacitor (C₂) causes a shift between a phase of a current in the first winding (W₁) and a phase of a current in at least one second winding (W₂) or in more than one further windings (W₃, W₄, W₅), such that the electric motor (10) is caused to start rotation.

5. Kitchen appliance according to claim 4, **characterized in that** at least the second capacitor (C₂) and the second winding (W₂) and a third winding (W₃), in particular also a fourth winding (W₄), preferably also a fifth winding (W₅), are connectable or connected in series, wherein the serial connection of second capacitor (C₂), second and third winding (W₂, W₃), in particular also of fourth winding (W₄), preferably also of fifth winding (W₅), is connectable or connected in parallel with the first winding (W₁).

6. Kitchen appliance according to any one of the preceding claims, **characterized in that** the first capacitor (C₁) has a capacitance in the range from 3µF to 9µF, preferably from 4µF to 8µF, more preferably 6µF.

7. Kitchen appliance according to any one of the preceding claims, wherein the second capacitor (C₂) has a capacitance in the range from 0,1µF to 10µF, in particular from 1µF to 6µF, preferably from 2µF to 4µF, more preferably 3,15µF.

8. Kitchen appliance according to any one of the preceding claims, **characterized in that** the first capacitor (C₁) and the second capacitor (C₂) are arranged in one common capacitor component housing.

9. Kitchen appliance according to any one of the preceding claims, **characterized in that** the exhaust device generates an exhaust air flow volume equal or lower than 250m³ gas per hour, preferably equal or lower than 200m³ gas per hour.

10. Kitchen appliance according to any one of the preceding claims, **characterized in that** the kitchen appliance is a kitchen hood or an exhaust hood or a cooking appliance, in particular a cooking hob or an oven.

## Patentansprüche

1. Küchengerät, umfassend eine Absaugvorrichtung zum Abführen von in einem Garprozess erzeugtem Dampf oder erzeugten Dämpfen, wobei die Absaugvorrichtung einen Elektromotor (10) und eine Schaltungsanordnung zum Steuern der Drehzahl des Elektromotors (10) umfasst, wobei der Elektromotor (10) mindestens eine erste Wicklung (W₁) umfasst, die mit einer Stromquelle verbindbar oder verbunden ist, wobei die erste Wicklung (W₁), wenn sie mit der Stromquelle (20) verbunden ist, einen Wechselstrom empfängt, der durch die Stromquelle (20) bereitgestellt wird, und bewirkt, dass sich der Elektromotor (10) mit einer vorbestimmten Drehzahl dreht, die von dem durch die erste Wicklung (W₁) empfangenen Wechselstrom abhängt, wobei die Schaltungsanordnung mindestens einen ersten Kondensator (C₁) umfasst, der in Reihe mit der ersten Wicklung (W₁) schaltbar oder geschaltet ist und der bewirkt, dass sich der Elektromotor (10) mit einer Drehzahl dreht, die niedriger als die vorbestimmte Drehzahl ist, wenn er in Reihe mit der ersten Wicklung (W₁) geschaltet wird,
**dadurch gekennzeichnet, dass**
das Küchengerät dazu ausgelegt ist, die Absaugvorrichtung zu betreiben, wenn ein dem Küchengerät zugeordneter Garprozess läuft und/oder gestoppt wird, wobei der erste Kondensator (C₁) beim oder nach dem Stoppen des dem Küchengerät zugeordneten Garprozesses automatisch in Reihe mit der ersten Wicklung (W₁) geschaltet wird, wobei der erste Kondensator (C₁) eine Kapazität im Bereich von 1 µF bis 11 µF aufweist, und
die Absaugvorrichtung einen Abluftvolumenstrom erzeugt, der gleich oder kleiner als 300 m³ Gas pro Stunde ist.

2. Küchengerät nach Anspruch 1, **dadurch gekennzeichnet, dass** der in Reihe mit der ersten Wicklung (W₁) geschaltete erste Kondensator (C₁) einen erhöhten Spannungsabfall über der ersten Wicklung (W₁) bewirkt, verglichen mit einem Spannungsabfall über der ersten Wicklung (W₁), wenn der erste Kondensator (C₁) nicht in Reihe mit der ersten Wicklung (W₁) geschaltet ist.

3. Küchengerät nach einem der vorhergehenden Ansprüche, **dadurch gekennzeichnet, dass** der Elektromotor (10) mindestens zwei oder drei oder vier oder mehr Wicklungen (W₁, W₂, W₃, W₄, W₅) umfasst, wobei der Elektromotor (10) veranlasst wird, sich mit seiner maximalen Drehzahl zu drehen, wenn die erste Wicklung (W₁) insbesondere die einzige Wicklung des Elektromotors (10) ist, die mit der Stromquelle (20) verbunden ist.

4. Küchengerät nach einem der vorhergehenden Ansprüche, **dadurch gekennzeichnet, dass** der Elektromotor (10) ein Asynchroninduktionsmotor, insbesondere ein einphasiger Asynchroninduktionsmotor, ist, wobei die Schaltungsanordnung mindestens einen zweiten Kondensator (C₂) umfasst, der bewirkt, dass der Elektromotor (10) beim Verbinden des Elektromotors (10) mit der Stromquelle (20) zu drehen beginnt, wobei insbesondere der mindestens eine zweite Kondensator (C₂) eine Phasenverschiebung zwischen einem Strom in der ersten Wicklung (W₁) und einem Strom in mindestens einer zweiten Wicklung (W₂) oder in mehr als einer weiteren Wicklung (W₃, W₄, W₅) bewirkt, so dass der Elektromotor (10) zu drehen beginnt.

5. Küchengerät nach Anspruch 4, **dadurch gekennzeichnet, dass** zumindest der zweite Kondensator (C₂) und die zweite Wicklung (W₂) und eine dritte Wicklung (W₃), insbesondere auch eine vierte Wicklung (W₄), vorzugsweise auch eine fünfte Wicklung (W₅), in Reihe schaltbar oder geschaltet sind, wobei die Reihenschaltung aus dem zweiten Kondensator (C₂), der zweiten und dritten Wicklung (W₂, W₃), insbesondere auch der vierten Wicklung (W₄), vorzugsweise auch der fünften Wicklung (W₅), parallel zu der ersten Wicklung (W₁) schaltbar oder geschaltet ist.

6. Küchengerät nach einem der vorhergehenden Ansprüche, **dadurch gekennzeichnet, dass** der erste Kondensator (C₁) eine Kapazität im Bereich von 3 µF bis 9 µF, bevorzugt von 4 µF bis 8 µF, besonders bevorzugt von 6 µF aufweist.

7. Küchengerät nach einem der vorhergehenden Ansprüche, wobei der zweite Kondensator (C₂) eine Kapazität im Bereich von 0,1 µF bis 10 µF, insbesondere von 1 µF bis 6 µF, bevorzugt von 2 µF bis 4 µF, besonders bevorzugt von 3,15 µF aufweist.

8. Küchengerät nach einem der vorhergehenden Ansprüche, **dadurch gekennzeichnet, dass** der erste Kondensator (C₁) und der zweite Kondensator (C₂) in einem gemeinsamen Kondensatorbauteilgehäuse angeordnet sind.

9. Küchengerät nach einem der vorhergehenden Ansprüche, **dadurch gekennzeichnet, dass** die Absaugvorrichtung einen Abluftvolumenstrom erzeugt, der gleich oder kleiner als 250 m³ Gas pro Stunde ist, vorzugsweise gleich oder kleiner als 200 m³ Gas pro Stunde ist.

10. Küchengerät nach einem der vorhergehenden Ansprüche, **dadurch gekennzeichnet, dass** das Küchengerät eine Küchenhaube oder eine Dunstabzugshaube oder ein Gargerät, insbesondere ein Kochfeld oder ein Ofen, ist.

## Revendications

1. Appareil de cuisine comprenant un dispositif d'évacuation pour évacuer la vapeur ou les fumées générées dans un processus de cuisson, le dispositif d'évacuation comprenant un moteur électrique (10) et une circuiterie pour commander la vitesse de rotation du moteur électrique (10), le moteur électrique (10) comprenant au moins un premier enroulement (W₁) connectable ou connecté à une source d'alimentation, le premier enroulement (W₁) lorsqu'il est connecté à la source d'alimentation (20) recevant un courant alternatif fourni par la source d'alimentation (20) et amenant le moteur électrique (10) à entrer en rotation à une vitesse de rotation prédéterminée dépendant du courant alternatif reçu par le premier enroulement (W₁), la circuiterie comprenant au moins un premier condensateur (C₁) qui est commutable ou commuté en série avec le premier enroulement (W₁) et qui amène le moteur électrique (10) à entrer en rotation à une vitesse de rotation inférieure à la vitesse de rotation prédéterminée lorsqu'il est commuté en série avec le premier enroulement (W₁),
**caractérisé en ce que**
l'appareil de cuisine est configuré pour faire fonctionner le dispositif d'évacuation lorsqu'un processus de cuisson associé à l'appareil de cuisine est en marche et/ou est arrêté, dans lequel le premier condensateur (C₁) est automatiquement commuté en série avec le premier enroulement (W₁) lors de ou après l'arrêt du processus de cuisson associé à l'appareil de cuisine, dans lequel le premier condensateur (C₁) a une capacité dans la plage allant de 1 µF à 11 µF, et
le dispositif d'évacuation génère un volume d'écoulement d'air d'évacuation égal ou inférieur à 300 m³ de gaz par heure.

2. Appareil de cuisine selon la revendication 1, **caractérisé en ce que** le premier condensateur (C₁) commuté en série avec le premier enroulement (W₁) provoque une chute de tension accrue sur le premier enroulement (W₁) comparé à une chute de tension sur le premier enroulement (W₁) quand le premier condensateur (C₁) n'est pas commuté en série avec le premier enroulement (W₁).

3. Appareil de cuisine selon l'une quelconque des revendications précédentes, **caractérisé en ce que** le moteur électrique (10) inclut au moins deux ou trois ou quatre enroulements ou plus (W₁, W₂, W₃, W₄, W₅), le moteur électrique (10) étant amené à entrer en rotation à sa vitesse de rotation maximale lorsque le premier enroulement (W₁), en particulier est le seul enroulement du moteur électrique (10) qui, est connecté à la source d'alimentation (20).

4. Appareil de cuisine selon l'une quelconque des revendications précédentes, **caractérisé en ce que** le moteur électrique (10) est un moteur à induction asynchrone, en particulier un moteur à induction asynchrone monophasé, dans lequel la circuiterie comprend au moins un deuxième condensateur (C₂) qui amène le moteur électrique (10) à commencer sa rotation en réponse à la connexion du moteur électrique (10) à la source d'alimentation (20), en particulier que l'au moins un deuxième condensateur (C₂) provoque un décalage entre une phase d'un courant dans le premier enroulement (W1) et une phase d'un courant dans au moins un deuxième enroulement (W2) ou dans plus d'un enroulement supplémentaire (W₃, W₄, W₅), de telle sorte que le moteur électrique (10) soit amené à commencer sa rotation.

5. Appareil de cuisine selon la revendication 4, **caractérisé en ce qu'**au moins le deuxième condensateur (C₂) et le deuxième enroulement (W₂) et un troisième enroulement (W₃), en particulier également un quatrième enroulement (W₄), préférablement également un cinquième enroulement (W₅), sont connectables ou connectés en série, dans lequel la connexion en série du deuxième condensateur (C₂), du deuxième et du troisième enroulement (W₂, W₃), en particulier également du quatrième enroulement (W₄), préférablement également du cinquième enroulement (W₅), sont connectables ou connectés en parallèle avec le premier enroulement (W₁).

6. Appareil de cuisine selon l'une quelconque des revendications précédentes, **caractérisé en ce que** le premier condensateur (C₁) a une capacité dans la plage allant de 3 µF à 9 µF, préférablement de 4 µF à 8 µF, plus préférablement de 6 µF.

7. Appareil de cuisine selon l'une quelconque des revendications précédentes, dans lequel le deuxième condensateur (C₂) a une capacité dans la plage allant de 0,1 µF à 10 µF, en particulier de 1 µF à 6 µF, préférablement de 2 µF à 4 µF, plus préférablement de 3,15 µF.

8. Appareil de cuisine selon l'une quelconque des revendications précédentes, **caractérisé en ce que** le premier condensateur (C₁) et le deuxième condensateur (C₂) sont agencés dans un logement de composants condensateurs commun.

9. Appareil de cuisine selon l'une quelconque des revendications précédentes, **caractérisé en ce que** le dispositif d'évacuation génère un volume d'écoulement d'air d'évacuation égal ou inférieur à 250 m³ de gaz par heure, préférablement égal ou inférieur à 200 m³ de gaz par heure.

10. Appareil de cuisine selon l'une quelconque des revendications précédentes, **caractérisé en ce que** l'appareil de cuisine est une hotte de cuisine ou une hotte d'évacuation ou un appareil de cuisson, en particulier une plaque de cuisson ou un four.
